# EUROPÄISCHE PATENTSCHRIFT

(11) **EP 0 418 557 B1**
(45) Veröffentlichungstag und Bekanntmachung des Hinweises auf die Patenterteilung: **06.07.1994**
(21) Anmeldenummer: 90115754.5
(22) Anmeldetag: 17.08.1990
(51) Int. Cl.: F16K 1/30, F16K 41/12, B23K 15/04

(54) **Absperrventil**
Shut off valve
Vanne d'arrêt

(30) Priorität: 30.08.1989 DE 3928678
(43) Veröffentlichungstag der Anmeldung: 27.03.1991
(73) Patentinhaber: MESSER GRIESHEIM GMBH, D-60270 Frankfurt (DE)
(72) Erfinder: Becker, Karl August, D-6365 Rosbach (DE); Hellmich, Jürgen, D-6000 Frankfurt 56 (DE)

(56) Entgegenhaltungen:
- GB-A- 958 810
- US-A- 2 521 891
- US-A- 3 959 988
- US-A- 4 296 307
- US-A- 4 671 490

## Beschreibung

Die Erfindung betrifft ein Absperrventil für Druckgasbehälter oder -leitungen, mit einer zweiteiligen Ventilspindel und einem Ventilverschlußstück, zwischen denen eine Membran angeordnet ist, wobei die Membran und das Verschlußstück mittels Schweißung verbunden sind.

Bei der Verwendung von hochreinen Gasen für verschiedene Produktionszwecke sind übliche Absperrventile wenig geeignet, da sie den in Bezug auf den Reinheitsgrad der Gase geforderten Höchstansprüchen nicht genügen. Die Qualität des hochreinen Gases muß bezüglich seiner Reinheit möglichst unverändert aus einem Behälter zu einem Verbraucher geleitet werden.

Um Verunreinigungskomponenten wie Partikel und Feuchtigkeit zu verringern, werden Absperrventile mit möglichst wenig vom Reinstgas berührten, insbesondere beweglichen Teilen benötigt. Dabei soll das Absperrventil einerseits eine Membran mit möglichst kleiner gasberührter Oberfläche aufweisen und andererseits sollen die von der Ventilspindel aufzubringenden Verstellkräfte beim Schließen des Absperrventiles möglichst gering und die Standzeit der Membran möglichst groß sein.

Es ist bekannt, bei einem Absperrventil die auf eine zweiteilige Ventilspindel wirkenden Verstellkräfte dadurch zu verringern, daß das Ventilspindelunterteil einen glatten, zylindrischen Spindelschaft aufweist, der einen kleineren Durchmesser hat, als die zylindrische Bohrung im Ventilgehäuse, wobei der zwischen dem Spindelschaft und der Bohrung gebildete Ringraum über eine O-Ring-Dichtung mit Druckstück abgedichtet wird (DE-OS 37 33 050). Dabei entsteht aufgrund der elastischen O-Ring-Dichtung und begrenzt elastischer Stützringe ein großer Abrieb bei der Verstellung der Ventilspindel, so daß dieses Absperrventil nicht geeignet ist für den Einsatz bei hochreinen Gasen. Darüber hinaus sind spezielle Reinstgase mit Luft unverträglich, korrosiv oder toxisch, so daß keine elastischen Dichtungen eingesetzt werden können.

Ein geeigneteres Absperrventil ist in der Broschüre "Membranventile", Serien LD und ELD, Nupro Company, N-786-G, 1986, sowie in der Veröftentlichung US-A-4 671 490, dargestellt, bei dem an der Ventilspindel ein Gewindebolzen vorgesehen ist, der über einen Haltering und die metallische Membran in das Ventilverschlußstück eingeschraubt ist. Dabei ist die Membran mit dem Ventilverschlußstück verschweißt und wird über ein auf die Ventilspindel wirkendes Handrad zwangsbetätigt. Die Flexibilität der Membran soll durch einen dreischichtigen Aufbau erreicht werden. Dabei ist die flachausgebildete Membran zwischen zwei Festpunkten angeordnet, so daß der Ventilhub nur über eine elastische bzw. plastische Verformung der Membran erfolgen kann. Die hierfür aufzubringenden Verstellkräfte beim Schließen des Ventiles sind groß und führen zu einer Kaltverformung und damit zu einer Verfestigung der Membran, wodurch die Lebensdauer herabgesetzt wird.

Um eine sichere Verbindung zwischen der Ventilspindel und der Baueinheit Membran/Ventilverschlußstück zu erreichen und fertigungstechnisch eine einfache Herstellung des Gewindebolzens zu ermöglichen, muß dieser einen Nenndurchmesser von mindestens 3 Millimeter aufweisen. Die dazugehörende Gewindebohrung weist dementsprechend den gleichen Durchmesser auf. Hinzu kommt eine den Nenndurchmesser der Gewindebohrung an der VentilverschlußstückOberseite vergrößernde Einsenkung sowie ein die Einsenkung umgebender Bund, an dem die metallische Membran stirnseitig anliegt.

Durch diese Ausbildung ist neben der Gefahr der Partikelbildung durch die Verschraubung der Ventilspindel mit dem Ventilverschlußstück bereits während der Montage des Absperrventiles nur eine Verschweißung der Membran mit dem Ventilverschlußstück in relativ großem Abstand zur Verstellachse (Mittelachse) des Absperrventiles möglich. Dies führt aber bei vorgegebenem Ventilhub zu einer großen gasberührten Membranoberfläche und damit zu großen aufzubringenden Verstellkräften beim Öffnen oder Schließen des Absperrventiles. Hinzu kommt, daß eine große Membranabmessung eine Vergrößerung des Absperventiles (Ventilkörper) und damit der gasberührten Oberfläche des Ventilraumes bewirkt.

Der Erfindung liegt somit die Aufgabe zugrunde, ein Absperrventil der genannten Art so auszubilden, daß eine Verbindung der Ventilspindel mit der Membran und dem Ventilverschlußstück in geringem Abstand zur Verstellachse und eine Verringerung der Verstellkräfte beim Schließen des Absperrventiles erfolgen kann.

Diese Aufgabe wird bei einem gattungsgemäßen Absperrventil durch die kennzeichnenden Merkmale des Ansprüches 1 gelöst

Unter einer Energiestrahlschweißung wird eine Bearbeitung mit einem Laserstrahl, einem Elektronenstrahl oder einem Plasmastrahl verstanden.

Um eine solche Verbindung, bei der die zweiteilige Ventilspindel, die metallische Membran und das Ventilverschlußstück gemeinsam mittels einer einzigen Energiestrahlschweißung unlösbar miteinander befestigt werden, zu ermöglichen, weist das Verschlußstück eine Öffnung auf, die zur Membranseite hin mittels eines Bodens verschlossen ist. Der Boden weist vorzugsweise eine Energiestrahl-Durchschweißdicke kleiner 1 Millimeter, vorzugsweise 0,5 Millimeter, auf, so daß mit einem vorzugsweise für die Bearbeitung verwendeten Elektronenstrahl eine Durchschweißtiefe von mindestens 1 Millimeter, vorzugsweise jedoch 2 Millimeter erreicht wird. Die dreiteilig aufgebaute Membran weist vorteilhaft hierbei eine Dicke kleiner 0,5 Millimeter auf.

Eine besonders einfache Zuordnung von der Ventilspindel, der Membran und dem Ventilverschlußstück wird dadurch erzielt, daß an dem Boden ein zur Öffnung des Ventilverschlußstückes entgegengesetzt auskragender Bolzen vorgesehen ist, über dem die Membran mit einer konzentrisch vorgesehenen Öffnung angeordnet ist und der Bolzen mit der auf der Oberseite des Ventilverschlußstückes aufliegenden und stirnseitig von dem Bolzen zentrierten Membran in einer Öffnung des Verschlußstückes angeordnet werden kann. Die Abmessungen des Bolzens können hierbei kleiner als 3 Millimeter sein.

Durch die Erfindung kann der seitliche Abstand zwischen der Verstellachse des Absperrventiles und der Verbindung der Membran mit dem Ventilverschlußstück verringert werden, weil der auf der Verstellachse liegende Bolzen lediglich der Zuordnung der Membran und der Ventilspindel dient und dieser Bolzen aufgrund seiner Funktion nur geringe Abmessungen aufweisen muß. Gleichzeitig wird der Nachteil einer Gewindeverbindung, nämlich die Partikelerzeugung, vermieden, da unmittelbar neben dem Bolzen die Ventilspindel, die Membran und das Ventilverschlußstück durch eine Öffnung des Ventilverschlußstückes verschweißt werden. Hierdurch wird die Fertigung vereinfacht und bei vorgegebenem Hub eine kleinere gasberührte Membranoberfläche ermöglicht. Hieraus ergeben sich kleinere Abmessungen des Absperrventiles (Ventilgehäuse) und des gasberührten Ventilraumes. Darüber hinaus werden die auf das Bewegungsgewinde des Ventilspindeloberteiles wirkenden Kräfte verringert.

Durch eine entgegengesetzt zur Schließrichtung des Absperrventiles gewölbte Membran und eine zur Membran weisende Oberfläche des Ventilspindelunterteiles, die sich bei der Schließbewegung kontinuierlich an die Wölbung der Membran anlegt, werden die Verstellkräfte verringert und die Membran bei der Schließbewegung abgestützt. Eine Belastung über die Fließgrenze der Membran wird vermieden, bei gleichzeitiger Vergrößerung des Ventilhubes. Die Lebensdauer der Membran läßt sich durch diese Ausbildung wesentlich erhöhen, weil lediglich die durch die Wölbung verursachte Spannkraft überwunden werden muß.

Ein Ausführungsbeispiel der Erfindung ist in der Zeichnung dargestellt und wird im folgenden näher beschrieben

Es zeigen
- Fig. 1: eine Schnittdarstellung eines Flaschenventiles nach der Erfindung.
- Fig. 2: eine vergrößerte Schnittdarstellung des Ventilspindel - Membran - Ventilverschlußstück - Verbundes.

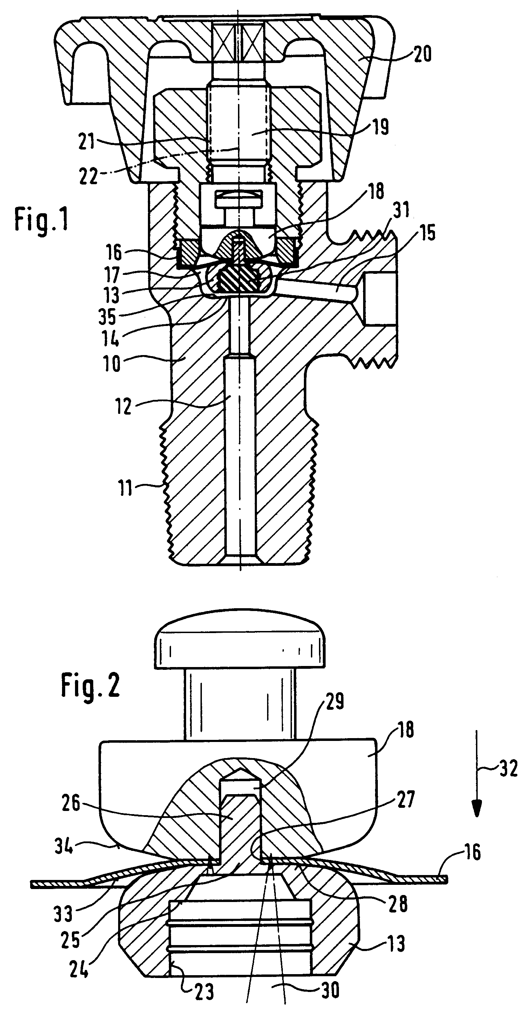

Die in der Fig. 1 dargestellte Ausführungsvariante eines als Gasflaschenventil ausgebildeten Absperrventiles besteht aus einem Ventilgehäuse 10, das über einen Einschraubstutzen 11 mit einem nicht näher dargestellten Hochdruckbehälter für hochreines Gas verbunden werden kann.

Von dem Behälter strömt das Gas mit einem Druck von beispielsweise 200 bar in die Gasdruckleitung 12, von der es über ein Verschlußventil 13, 14 zu einer Gasabführungsleitung 15 geleitet wird. Das Verschlußventil 13, 14 besteht aus einem Ventilverschlußstück 13 und einem Ventilsitz 14 und ist in einem, mit einer metallischen Membran 16 abgedichteten Ventilraum 17 angeordnet. Das Ventilverschlußstück 13 und die Membran 16 sind mit einer zweiteiligen Ventilspindel 18, 19 verbunden, deren Ventilspindeloberteil 19 zu dem in Drehrichtung ruhenden Ventilspindelunterteil drehbar, aber in Axialrichtung kraftschlüssig verbunden ist. Mit dem Ventilspindeloberteil 19 ist ein Handrad 20 verbunden, bei dessen Drehung das Ventilspindeloberteil 19 über ein Bewegungsgewinde 21 axial verstellt werden kann. Die axiale Verstellung entlang der Verstellachse 22 bewirkt ein Öffnen oder Schließen des Verschlußventiles 13, 14.

In der Fig. 2 sind das Ventilspindelunterteil 18, die Membran 16 und das Ventilverschlußstück 13 in einem größeren Maßstab dargestellt. Das Ventilverschlußstück 13 weist eine am Beginn zylindrische Stufenöffnung 23 auf, die sich nach einer Anlagefläche 24 konisch verengt und mit einem Boden 25 zur Membranseite hin abgeschlossen ist. Von der Außenseite des Bodens kragt ein Bolzen 26, dessen Seitenlänge bzw. dessen Durchmesser vorzugsweise kleiner 3 Millimeter ist. Der Bolzen 26 und die Stufenöffnung 23 sind so konzentrisch zur Verstellachse 22 ausgebildet, daß zwischen der äußersten Abmessung des Bolzens 26 und der kleinsten Abmessung der konischen Verengung ein mindestens der Schweißnahtbreite entsprechendes, im wesentlichen ebenes Bodenteil verbleibt.

Die Membran 16 weist eine im wesentlichen den Außenabmessungen des Bolzens 26 entsprechende Öffnung auf, mittels der sie auf dem Bolzen 26 angeordnet werden kann.

Das Ventilverschlußstück 13 mit der auf seiner Oberfläche 28 aufliegenden, vorgespannten Membran 16 wird mit dem Bolzen 26 in einer koaxial zur Verstellachse 22 vorgesehenen Öffnung 29 des Ventilspindelunterteiles 18 angeordnet, so daß das Ventilspindelunterteil 18, die Membran 16 und das Ventilverschlußstück 13 zueinander zentriert sind. Anschließend wird ein Energiestrahl 30, vorzugsweise ein Elektronenstrahl, auf das ebene Bodenteil fokussiert und das Ventilspindelunterteil 18, die Membran 16 und das Ventilverschlußstück 13 direkt miteinander verbunden.

In dem zylindrischen Teil der Stufenöffnung 23 wird nach der Schweißung ein Dichtkörper 31 (Fig. 1) angeordnet.

Die Membran 16 ist entgegengesetzt zur Schließrichtung 32 des Ventiles 13, 14 gewölbt 33 ausgebildet. Dabei weist das Ventilspindelunterteil 18 eine zur Membran 16 gerichtete Oberfläche 34 auf, die sich bei der Schließbewegung (Pfeilrichtung 32) des Ventilspindelunterteiles 18 kontinuierlich an die Wölbung 33 der Membran 16 anlegt und diese abstützt. Eine Verformung der Membran 16 über deren Dehnungsgrenze wird vorteilhaft durch den nur gering über der Wandebene 35 des Ventilraumes 17 ausgebildeten Ventilsitz 14 erreicht. Beim Schließen des Ventiles 13, 14 kann der Dichtkörper 31 nur um den geringen, vorgegebenen Abstand zwischen Ventilsitz 14 und Wandebene 35 verformt werden, wonach sich das Ventilverschlußstück 13 auf die Wandebene 35 aufsetzt.

Die Erfindung ist selbstverständlich nicht auf das vorstehend beschriebene Gasflaschenventil beschränkt, sondern kann auch vorteilhaft bei einem Leitungsventil eingesetzt werden.

## Patentansprüche

1. Absperrventil für Druckgasbehälter oder -leitungen, mit einer Ventilspindel (18) und einem Ventilverschlußstück (13), zwischen denen eine Membran (16) angeordnet ist, wobei die Membran (16) und das Verschlußstück (13) mittels Schweißung (30) verbunden sind,
dadurch gekennzeichnet,
daß das Ventilverschlußstück (13) mit einer Öffnung (23) versehen ist, die zur Membranseite hin ein Bodenteil (25) aufweist, und daß das Bodenteil (25) des Ventilverschlußstückes (13), die Membran (16) und die Ventilspindel (18) mittels einer Energiestrahlschweißung (30) zusammen verbunden sind.

2. Absperrventil für Druckgasbehälter oder -leitungen nach Anspruch 1,
dadurch gekennzeichnet,
daß an dem Bodenteil (25) des Verschlußstückes (13) ein Bolzen (26) mit einer Seitenlänge oder einem Durchmesser von vorzugsweise kleiner 3 Millimeter vorgesehen ist, der in einer Öffnung (29) der Ventilspindel (18) angeordnet ist.

3. Absperrventil für Druckgasbehälter oder -leitungen nach einem der Ansprüche 1 und 2,
dadurch gekennzeichnet,
daß die Membran (16) entgegengesetzt zur Schließrichtung (32) des Ventiles (13, 14) gewölbt ausgebildet ist.

4. Absperrventil für Druckgasbehälter oder -leitungen nach Anspruch 3,
dadurch gekennzeichnet,
daß die Ventilspindel (18) eine zur Membran (16) weisende Oberfläche (34) aufweist, die bei der Schließbewegung der Ventilspindel (18, 19) sich kontinuierlich an die Wölbung (33) der Membran (16) anlegt.

## Claims

1. Shut-off valve for compressed-gas containers or pipes, having a valve spindle (18) and a valve closure (13) between which there is disposed a membrane (16), the membrane (16) and the closure (13) being joined by means of welding (30), characterized in that the valve closure (13) is provided with an opening (23) which exhibits, in the direction of the membrane side, a base part (25), and in that the base part (25) of the valve closure (13), the membrane (16) and the valve spindle (18) are joined together by means of an energy-beam welding (30).

2. Shut-off valve for compressed-gas containers or pipes according to Claim 1, characterized in that on the base part (25) of the closure (13) there is provided a bolt (26) having a side length or a diameter of preferably less than 3 millimetres, which bolt is disposed in an opening (29) in the valve spindle (18).

3. Shut-off valve for compressed-gas containers or pipes according to either of Claims 1 and 2, characterized in that the membrane (16) is configured such that it is curved oppositely to the closing direction (32) of the valve (13, 14).

4. Shut-off valve for compressed-gas containers or pipes according to Claim 3, characterized in that the valve spindle (18) exhibits a surface (34) which points towards the membrane (16) and which, during the closing movement of the valve spindle (18, 19), bears continuously against the curvature (33) of the membrane (16).

## Revendications

1. Vanne d'arrêt pour réservoir ou conduite à gaz comprimé comportant une broche de vanne (18) et un organe d'obturation (13) entre lesquels se trouve une membrane (16), cette membrane 16) et l'organe d'obturation (13) étant reliés par soudure (30), caractérisée en ce que l'organe d'obturation (13) est muni d'une ouverture (23) ayant du côté de la membrane, une partie de fond (25) et cette partie de fond (25) de l'organe d'obturation (13), la membrane (16) et la broche de vanne (18) sont réunies par une soudure par faisceau d'électrons (30).

2. Vanne d'arrêt selon la revendication 1, caractérisée en ce qu'un goujon (26) de longueur latérale ou de diamètre de préférence inférieur à 3 mm est prévu sur la partie de fond (25) de l'organe d'obturation (13), ce goujon se trouvant dans une ouverture (29) de la broche de vanne (18).

3. Vanne d'arrêt selon l'une des revendications 1 et 2, caractérisée en ce que la membrane (16) est bombée de façon opposée à la direction de fermeture (32) de la soupape (13, 14).

4. Vanne d'arrêt selon la revendication 3, caractérisée en ce que la broche de vanne (18) présente une surface supérieure (34) tournée vers la membrane (16) qui lors du mouvement de fermeture de la broche de vanne (18, 19) s'applique en continu contre la courbure (33) de la membrane (16).
